# FASCICULE DE BREVET EUROPEEN

(11) **EP 1 228 423 B1**
(45) Date de publication et mention de la délivrance du brevet: **22.10.2003**
(21) Numéro de dépôt: 00977512.3
(22) Date de dépôt: 08.11.2000
(51) Int. Cl.: G06F 3/033

(54) **PROCEDE DE COMMANDE D'UNE SURFACE TACTILE**
VERFAHREN ZUR STEUERUNG EINER BERÜHRUNGSEMPFINDLICHEN OBERFLÄCHE
METHOD FOR CONTROLLING A TOUCHPAD

(30) Priorité: 09.11.1999 FR 9914064
(43) Date de publication de la demande: 07.08.2002
(73) Titulaire: Siemens VDO Automotive S.A.S., 31036 Toulouse Cédex 01 (FR)
(72) Inventeur: RANTET, Dominique, F-31870 Beaumont-sur-Leze (FR); EXCOFFIER, David, F-31000 Toulouse (FR)
(74) Mandataire: Berg, Peter, Dipl.-Ing.
(86) Numéro de dépôt international: EP0011042
(87) Numéro de publication internationale: WO01035204

(56) Documents cités:
- EP-A- 0 395 469
- EP-A- 0 992 878
- GB-A- 2 319 591
- US-A- 5 729 219

## Description

La présente invention concerne un procédé de commande d'une surface tactile. Plus exactement, il s'agit d'une surface tactile mise en place dans un véhicule automobile.

Il est déjà connu d'utiliser une surface tactile en tant qu'organe d'entrée de commande pour un véhicule automobile (voir à cet effet la demande de brevet FR 9911409 au nom de la demanderesse). Une telle surface tactile (couramment appelée «touch pad») est pratique car elle permet de commander tous les dispositifs électroniques situés à l'intérieur de l'habitacle du véhicule à partir d'un même organe de commande. Cependant, les vibrations et conditions de circulations rencontrées lors de la conduite d'un véhicule automobile sont telles qu'il est impossible d'utiliser cette surface tactile sans adaptations.

En effet, lorsque la surface tactile est utilisée dans un lieu stable (sur une table, par exemple), il est relativement facile de faire déplacer un curseur sur un écran d'affichage en déplaçant son doigt sur la surface tactile. Dans un véhicule, la précision requise est trop importante et le déplacement du doigt peut être incertain.

Pour pallier cet inconvénient, chaque mouvement du doigt d'un utilisateur est considéré comme un déplacement selon la direction privilégiée la plus proche. Deux mouvements successifs doivent être séparés par une pause.

Ainsi, lorsque le curseur doit se déplacer dans une direction donnée de quelques cases, il est nécessaire de tracer plusieurs segments successifs dans cette direction, chacun de ces segments étant séparé par une pause temporelle. Lorsqu'un grand nombre de mouvements successifs (déplacement de huit cases dans une même direction par exemple) est nécessaire, l'utilisateur ne peut pas les tracer sur la surface tactile en continuité, car il sort de cette surface. A chaque fois, l'utilisateur doit reporter son doigt de l'autre côté de l'écran et recommencer. On conçoit que ce type de manipulation soit possible lorsque la surface tactile est implantée dans un lieu fixe. Par contre, dans un véhicule automobile en mouvement, ce type de déplacement accapare trop l'attention du conducteur.

Le document GB 2 319 591 concerne un appareil de saisie de données. Cet appareil est constitué par un écran tactile sur lequel se déplace le doigt de l'utilisateur. Les déplacements du doigt sur l'écran tactile commandent des déplacements correspondants d'un curseur sur un écran. Il est possible avec cet appareil de réaliser les mêmes opérations qu'avec une souris électronique classique. Cet écran tactile peut être frappé du doigt pour valider une action, sans faire appel à un bouton spécifique (comme c'est le cas sur une souris par exemple). Néanmoins le problème des sorties d'écran tactile n'est pas résolu. Dans ce cas de manière classique il faut reporter son doigt de l'autre coté de l'écran et reprendre le mouvement interrompu. Ceci n'est guère aisé lorsque l'on utilise cet écran tactile dans un véhicule automobile. L'attention nécessitée est trop importante.

Le document US 5 729 219 concerne un dispositif muni d'un écran tactile et d'un écran d'affichage de même taille. Tout déplacement d'un doigt sur l'écran tactile engendre un déplacement identique d'un curseur sur l'écran d'affichage. Dans ce type de dispositif, le doigt ne sort jamais de l'écran tactile, mais cela nécessite un écran tactile de grande dimension, ce qui est impossible dans un véhicule. En effet dans un véhicule l'écran d'affichage est souvent de grande dimension pour éviter tout problème d'interprétation par le conducteur. L'écran tactile, par contre, est de dimension réduite de manière à ne pas encombrer la planche de bord. Une telle solution n'est pas transposable dans un véhicule automobile.

Le but de la présente invention est de réaliser de manière simple et rapide un déplacement d'un curseur de plusieurs cases dans une même direction en utilisant une surface tactile comme organe de commande. Ce déplacement doit se faire sans accaparer l'attention du conducteur.

A cet effet, la présente invention concerne un procédé de commande d'une surface tactile, la dite surface étant adaptée pour interpréter toute succession de déplacements d'un organe de commande selon des directions données, en une succession de commandes de déplacement d'un curseur selon ces mêmes directions, le dit procédé étant caractérisé en ce qu'il consiste en outre à considérer une succession de déplacements comme une succession de commande de déplacements dans un même sens et selon un incrément déterminé, lorsque cette succession de déplacements est constituée de mouvements allers retours entre deux directions sensiblement opposées et lorsque ces mouvements sont enchaînés en continuité.

Ainsi, un aller et retour rapide du doigt de l'utilisateur sur la surface tactile indique au curseur qu'il doit se déplacer d'une case dans la direction globale de l'aller effectué. Si plusieurs allers et retours rapides sont enchaînés, cela signifie que le curseur doit se déplacer de plusieurs cases dans la direction globale des trajets allers du doigt.

On notera que le nombre d'allers et retours pouvant être effectués sans sortir de la surface tactile est illimité. En effet, ces allers et retours sont effectués «sur place » et donc le doigt de l'utilisateur ne sort pas de l'écran.

En outre, la réalisation de ces allers et retours ne requiert que très faiblement l'attention du conducteur.

Avantageusement, le procédé selon l'invention comporte une étape de filtrage de la dérive du doigt. Ainsi, même si le conducteur effectue une pluralité d'allers et retours en dérivant sur l'écran, cette dérive du doigt est prise en compte et la commande est tout de même correctement interprétée.

Bien entendu l'organe d'entrée de données peut être le doigt de l'utilisateur mais également un dispositif de commande du type souris électronique, stylo optique ou analogue.

D'autres objets, caractéristiques et avantages de la présente invention ressortiront d'ailleurs de la description qui suit, à titre d'exemple non limitatif, et en référence aux dessins annexés dans lesquels :
- **la figure 1** est une vue schématique d'un poste de conduite de véhicule automobile muni d'une surface tactile,
- **la figure 2** est une vue schématique d'un écran d'affichage commandé par la surface tactile,
- **la figure 3** est une vue représentant les déplacements d'un doigt sur la surface tactile mettant en oeuvre le procédé de commande selon l'invention, et
- **La figure 4** est une vue schématique illustrant le filtrage de la dérive du doigt selon la présente invention.

Le procédé selon la présente invention, utilise une surface tactile 10 (encore appelée « touch pad ») comme organe de commande des dispositifs électroniques embarqués dans un véhicule automobile.

Cette surface tactile est disposée, par exemple, sur la partie centrale du volant. Elle se trouve ainsi aisément accessible par le conducteur, même si celui-ci ne regarde pas le volant directement.

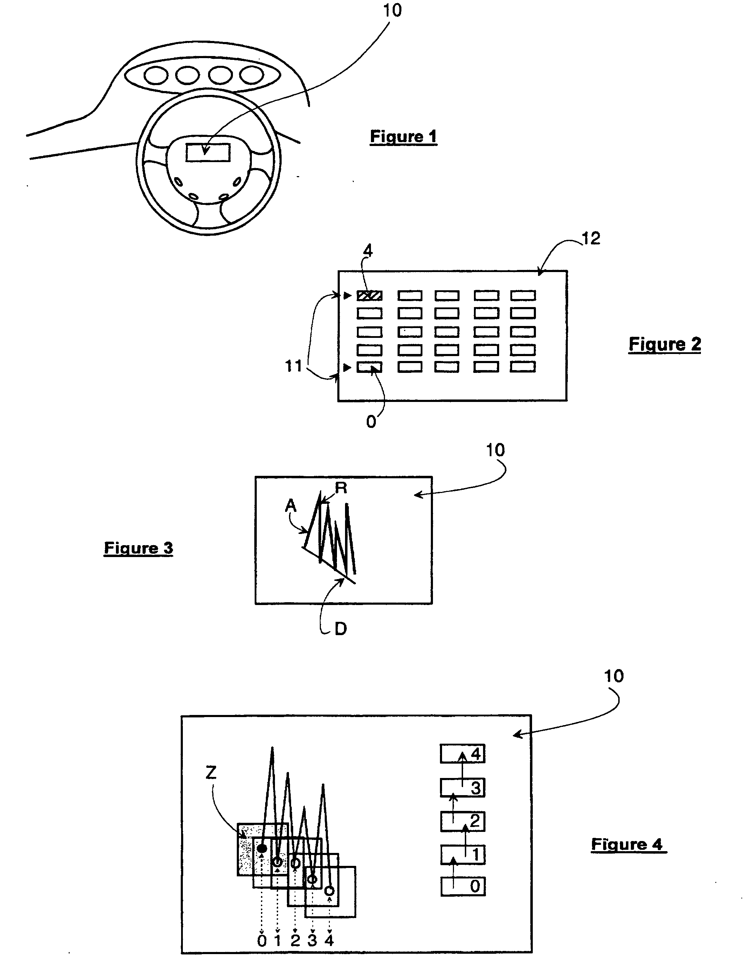

Pour commander la mise en marche de l'auto-radio (par exemple) le conducteur déplace son doigt sur la surface tactile de manière à déplacer de manière correspondante un curseur 11 sur un écran d'affichage 12 (figure 2). Si le curseur est en face de la position repérée zéro (0) et qu'il est nécessaire de le déplacer dans la position 4 pour mettre en marche l'auto-radio, le conducteur doit déplacer son doigt quatre fois vers le haut pour atteindre cette position. Cependant, en agissant ainsi, il se peut que son doigt sorte de la surface tactile (cette surface est relativement petite de l'ordre de 100 cm²).

Pour pallier cet inconvénient, le procédé de commande selon la présente invention propose au lieu de réaliser quatre déplacements rectilignes vers le haut de réaliser quatre allers retours rapides (A / R) avec le doigt, comme le montre la figure 3. Chaque aller / retour est alors considéré comme une commande de déplacement du curseur 11 de la valeur de l'incrément (en général cet incrément correspond à une case). Un aller retour est détecté chaque fois que deux déplacements de direction sensiblement opposées sont enchaînés rapidement (en continuité).

Ainsi, une succession de mouvements rectilignes dans une direction donnée est remplacée par une même succession d'allers et retours. L'intérêt d'un tel mode de commande réside dans le fait qu'en réalisant des allers et retours le doigt revient à peu près au même endroit (à son point de départ) et ne risque pas de sortir de la surface tactile quel que soit le nombre de mouvements rectilignes à effectuer.

Il est à noter que la succession d'allers et retours sera considérée comme une demande de mouvement pas à pas uniquement si cette succession d'allers retours est réalisée rapidement, c'est-à-dire si ces mouvements sont enchaînés en continuité. Ainsi, le temps s'écoulant entre un aller et un retour devra être inférieur à une valeur seuil, par exemple, d'une demi-seconde. Si le temps séparant un mouvement aller et un mouvement retour est supérieur à cette valeur seuil, alors les mouvements du doigt seront interprétés comme une demande de déplacement vers le haut suivie d'une demande de déplacement vers le bas.

Cependant, en réalisant une succession d'allers et retours, il est pratiquement impossible (surtout si ces déplacements sont réalisés sans regarder la surface tactile et tout en conduisant) de rester strictement et exactement dans la même zone de la surface tactile. Comme le montre la figure 3, le doigt a tendance à dériver par exemple selon une ligne de dérive D.

Le procédé selon la présente invention utilise une étape de filtrage de la dérive du doigt qui permet de tenir compte de cette dérive et d'analyser correctement les déplacements de doigt réalisés par le conducteur.

A cet effet, le point initial d'impact du doigt (-0- figure 4) est mémorisé. Une zone morte Z de dimension et de taille déterminée est établie autour de ce point initial d'impact. Lorsqu'un mouvement aller / retour est détecté, le procédé selon l'invention mémorise le point (1) ou un second mouvement aller retour est initialisé. Si ce point se situe dans la zone morte antérieure (c'est à dire celle du point initial), alors la zone morte initiale est décalée et est recentrée autour de ce nouveau point (1), et ainsi de suite pendant toute la durée de la succession d'allers retours.

Ainsi, même si le doigt du conducteur dépasse la position initiale (0), ce dépassement (1) n'est pas interprété comme une demande de nouveau déplacement (vers le bas à la figure 4 entre le point 0 et le point 1).

Il est à noter que dans la description ci-dessus, le doigt du conducteur peut être remplacé par tout organe de commande analogue comme par exemple une souris électronique, un stylo optique, etc...

Bien entendu, la présente invention n'est pas limitée au mode de mise en oeuvre décrit et englobe toute variante à la portée de l'homme de l'art. Ainsi, des allers / retours réalisés de manière perpendiculaire à ceux présentés aux figures 3 et 4 peuvent également être utilisés pour provoquer des déplacements successifs vers la droite ou vers la gauche (sur les dessins). De même, des allers et retour tracés de manière oblique signifie que l'on désire que le curseur se déplace selon cette direction oblique (une ou plusieurs fois).

## Revendications

1. Procédé de commande d'une surface tactile, la dite surface (10) étant adaptée pour interpréter toute succession de déplacements d'un organe de commande selon des directions données, en une succession de commandes de déplacement d'un curseur sur un écran selon ces mêmes directions, le dit procédé étant **caractérisé en ce qu'**il consiste en outre à considérer une succession de déplacements de l'organe de commande comme une succession de commandes de déplacements du curseur sur l'écran dans un même sens et selon un incrément déterminé, lorsque cette succession de déplacements est constituée de mouvements allers retours (A / R) entre deux directions sensiblement opposées et lorsque ces mouvements sont enchaînés en continuité.

2. Procédé selon la revendication 1 **caractérisé en ce que** chaque aller retour est considéré comme une commande de déplacement du curseur de la valeur de l'incrément.

3. Procédé selon la revendication 1 ou 2, **caractérisé en ce qu'**on détermine, autour d'un point de premier impact (0) du dispositif de commande, une zone morte (Z) de forme et de dimension prédéterminées.

4. Procédé selon la revendication 3, **caractérisé en ce qu'**on réalise un filtrage de la dérive du dispositif de commande au cours d'une succession d'allers et retours.

5. Procédé selon la revendication 4, **caractérisé en ce que** le filtrage consiste à créer une nouvelle zone morte autour du point où un nouvel aller et retour est initialisé, si ce point se trouve dans la zone morte antérieure.

6. Procédé selon l'une quelconque des revendications 1 à 5, **caractérisé en ce que** deux mouvements sont considérés comme étant enchaînés en continuité lorsqu'ils sont effectués avec moins d'une demi-seconde d'écart temporel entre eux.

7. Procédé selon l'une quelconque des revendications précédentes, **caractérisé en ce que** l'organe de commande est constitué par le doigt d'un utilisateur ou tout organe de commande analogue.

## Patentansprüche

1. Verfahren zum Steuern einer berührungsempfindlichen Oberfläche, welche berührungsempfindliche Oberfläche (10) in der Lage ist, jegliche Folge von Verschiebungen eines Steuergliedes in vorgegebener Richtung als Folge von Steuerbefehlen zum Verschieben eines Cursors auf einem Schirm in die gleichen Richtungen zu interpretieren, wobei das Verfahren **dadurch gekennzeichnet ist, dass** es ferner darin besteht, eine Folge von Verschiebungen des Steuergliedes als Folge von Steuerbefehlen zum Verschieben des Cursors auf dem Schirm in einer selben Richtung und um ein bestimmtes Inkrement anzusehen, wenn diese Folge von Verschiebungen von Vorwärts- /Rückwärtsbewegungen (A/R) zwischen zwei im wesentlichen entgegengesetzten Richtungen gebildet wird und wenn diese Bewegungen kontinuierlich aneinandergereiht werden.

2. Verfahren nach Anspruch 1, **dadurch gekennzeichnet, dass** jede Vorwärts/Rückwärtsbewegung als Steuerbefehl zum Verschieben des Cursors um den Wert des Inkrementes angesehen wird.

3. Verfahren nach Anspruch 1 oder 2, **dadurch gekennzeichnet, dass** um einen ersten Berührungspunkt (0) der Steuervorrichtung eine tote Zone (Z) vorgegebener Form und Abmessung bestimmt wird.

4. Verfahren nach Anspruch 3, **dadurch gekennzeichnet, dass** eine Filtrierung von Abweichungen der Steuervorrichtung im Verlauf einer Folge von Vorwärts- und Rückwärtsbewegungen durchgeführt wird.

5. Verfahren nach Anspruch 4, **dadurch gekennzeichnet, dass** die Filtrierung darin besteht, eine neue tote Zone um den Punkt herum zu schaffen, an dem eine neue Vorwärts- und Rückwärtsbewegung ausgelöst wurde, wenn sich dieser Punkt in der vorherigen toten Zone befindet.

6. Verfahren nach einem der Ansprüche 1 bis 5, **dadurch gekennzeichnet, dass** zwei Bewegungen als kontinuierlich aneinander angereiht angesehen werden, wenn sie mit weniger als einer halben Sekunde eines zeitlichen Abstandes zwischen ihnen durchgeführt werden.

7. Verfahren nach einem der vorhergehenden Ansprüche, **dadurch gekennzeichnet, dass** das Steuerglied von dem Finger eines Benutzers oder einem entsprechenden Steuerglied gebildet wird.

## Claims

1. Method for controlling a touch-sensitive surface, said surface (10) being adapted to interpret any succession of movements of a control member in specific directions into a succession of movement commands for a cursor on a screen in those same directions, said method being **characterised in that** it further consists in considering a succession of movements of the control member as a succession of movement commands for the cursor on the screen in a same direction and by a predetermined increment, if this succession of movements consists of to-and-fro movements (A/R) between two substantially opposite directions and if these movements are continuously linked.

2. Method according to Claim 1, **characterised in that** each to-and-fro movement is considered as a movement command for the cursor by the increment value.

3. Method according to Claim 1 or 2, **characterised in that** a dead zone (Z) of predetermined shape and size is predetermined about a first impact point (0) of the control device.

4. Method according to Claim 3, **characterised in that** the drift of the control device is filtered during a succession of to-and-fro movements.

5. Method according to Claim 4, **characterised in that** the filtering consists in creating a new dead zone about the point where a new to-and-fro movement is initiated, if this point is located in the previous dead zone.

6. Method according to any of Claims 1 to 5, **characterised in that** two movements are considered as being continuously linked if they are carried out with a time interval of less than half a second between them.

7. Method according to any of the preceding claims, **characterised in that** the control member consists of a user's finger or any similar control member.
